# DEMANDE DE BREVET EUROPEEN

(11) **EP 4 252 976 A1**
(43) Date de publication de la demande: **04.10.2023**
(21) Numéro de dépôt: 23164977.3
(22) Date de dépôt: 29.03.2023
(51) Int. Cl.: B25J 15/02

(54) **PINCE DE PREHENSION DE TYPE PARALLELE AVEC MISE EN REFERENCE D'UN DES DEUX MORS**

(30) Priorité: 30.03.2022 FR 2202853
(71) Demandeur: Allegrini Techniques d'Assemblage, 35132 Vezin-le-Coquet (FR)
(72) Inventeur: ALLEGRINI, Grégoire, 35132 VEZIN-LE COQUET (FR)
(74) Mandataire: Ipsilon

(57) **Abrégé**

Pince à serrage parallèle comprenant
- un premier et un deuxième bras de préhension montés mobiles en translation sur un premier rail de guidage suivant une première direction ;
- un dispositif à cames monté mobile en translation sur un deuxième rail de guidage suivant une deuxième direction perpendiculaire à la première direction, ce dispositif à cames intégrant un premier et un deuxième chemin de came ;
- le premier bras de préhension comprenant un premier galet engagé dans le premier chemin de came et le deuxième bras de préhension comprenant un deuxième galet engagé dans le deuxième chemin de came de sorte qu'un déplacement du dispositif à cames suivant la deuxième direction permet un passage de ladite pince entre une position de serrage et une position de desserrage ;
- le premier chemin de came comprenant une section de chemin de came parallèle à la deuxième direction.

## Description

La présente invention concerne des dispositifs de préhension et plus particulièrement à une pince à serrage parallèle.

Il est connu de l'état de la technique des pinces à serrage parallèle comprenant deux mors mobiles l'un par rapport à l'autre en translation entre une position de serrage et une position de desserrage, et des moyens de manoeuvre adaptés pour déplacer ces deux mors entre la position de serrage et la position de desserrage. Les moyens de manoeuvre comportent le plus souvent des engrenages configurés pour synchroniser le mouvement des mors.

Par exemple, le document brevet JP4 230086B2 divulgue une pince à serrage parallèle apte à saisir une pièce ayant une surface de référence.

Toutefois, un inconvénient majeur des pinces à serrage parallèle connues est que, en fonction du jeu fonctionnel entre les engrenages, un mors vient en contact avec la pièce à saisir toujours avant l'autre et, de ce fait, désaxe la pièce par rapport à la pince. Un tel désaxement peut altérer la précision des opérations à effectuer sur la pièce, notamment lorsque ces opérations, la manipulation et/ou le positionnement de la pièce sont définies par rapport à une surface de référence de celle-ci.

Un autre inconvénient des pinces à serrage parallèle connues est que, dans le cas d'une prise de pièce par son enveloppe extérieure, cette dernière-est souvent la plus grande et la moins maîtrisée en termes de métrologie. Lesdites pinces perdent toute précision sur des dimensionnements intermédiaires recherchés, par exemple, pour un assemblage de la pièce saisie avec une autre, alors qu'une des deux faces de prise extérieures a bien souvent servi, lors de la conception de cette pièce, d'origine pour ces dimensionnements intermédiaires (par exemple, un trou situé entre les deux faces de prise et dont la cotation est définie par rapport à l'une des deux faces de prise utilisée comme référence).

Un but de la présente invention est de pallier les inconvénients précités.

Un objet de la présente invention est de proposer une pince à serrage parallèle convenable à des opérations de précision.

Un autre objet de la présente invention est de proposer une pince de préhension de type parallèle avec mise en référence d'un de ses deux mors pour une plus grande précision de prise.

A cet effet, il est proposé, en premier lieu, une pince à serrage parallèle apte à saisir une pièce ayant une surface de référence, cette pince comprenant :
- un premier bras de préhension et un deuxième bras de préhension montés mobiles en translation l'un par rapport à l'autre sur un premier rail de guidage suivant une première direction ;
- un dispositif à cames monté mobile en translation sur un deuxième rail de guidage suivant une deuxième direction sensiblement perpendiculaire à la première direction, ce dispositif à cames intégrant :
- un premier chemin de came s'étendant entre une première extrémité et une deuxième extrémité ;
- un deuxième chemin de came s'étendant entre une troisième extrémité et une quatrième extrémité ;
- le premier bras de préhension comprenant un premier galet engagé dans le premier chemin de came et le deuxième bras de préhension comprenant un deuxième galet engagé dans le deuxième chemin de came (en particulier de sorte qu'un déplacement du dispositif à cames suivant la deuxième direction permet un passage de ladite pince entre une position de serrage dans laquelle le premier galet et le deuxième galet sont, respectivement, à ladite première extrémité et à ladite troisième extrémité, et une position de desserrage dans laquelle le premier galet et le deuxième galet sont respectivement, à ladite deuxième extrémité et à ladite quatrième extrémité), le premier chemin de came comprenant, à sa première extrémité, une première section de chemin de came sensiblement parallèle à la deuxième direction de façon à maintenir, lors d'un passage de ladite pince de la position de desserrage à la position de serrage, le premier bras de préhension à une position prédéfinie à laquelle ce premier bras de préhension est configuré pour venir en contact avec la surface de référence de ladite pièce.

Diverses caractéristiques supplémentaires peuvent être prévues, seules ou en combinaison :
- le dispositif à cames comprend une première came intégrant le premier chemin de came, une deuxième came intégrant le deuxième chemin de came, un organe de traction ou de poussée permettant de déplacer le dispositif à cames suivant la deuxième direction, cet organe étant fixé à la première came, un moyen de liaison élastique en compression interposé entre la première came et la deuxième came, ce moyen de liaison élastique en compression étant destiné à transmettre, lors d'un passage de la pince de la position de desserrage à la position de serrage, à la deuxième came un effort appliqué à la première came dans la deuxième direction ;
- le moyen de liaison élastique en compression est un ressort de compression ;
- le dispositif à cames comprend, en outre, une vis interposée entre la première came et la deuxième came destinée à transmettre, lors d'un passage de ladite pince de la position de serrage à la position de desserrage, à la deuxième came un effort appliqué à la première came dans la deuxième direction ;
- la dimension du premier chemin de came dans la première direction est plus courte que la dimension du deuxième chemin de came dans cette première direction ;
- le deuxième chemin de came est oblique par rapport à la deuxième direction ;
- la pince comprend, en outre, une plaque support, le premier rail de guidage et le deuxième rail de guidage étant fixes par rapport à ladite plaque support, cette plaque support étant graduée dans la première direction et/ou dans la deuxième direction ;
- la pince comprend, en outre, un moyen de rappel élastique reliant le premier bras de préhension et le deuxième bras de préhension ;
- le premier bras de préhension et le deuxième bras de préhension sont configurés pour se rapprocher lors d'un passage de ladite pince de la position de desserrage à la position de serrage ;
- le premier bras de préhension et le deuxième bras de préhension sont configurés pour s'écarter lors d'un passage de ladite pince de la position de desserrage à la position de serrage ;
- les deux chemins de came comprennent chacun au moins une section non-parallèle à la deuxième direction.

D'autres caractéristiques et avantages de l'invention apparaîtront plus clairement et de manière concrète à la lecture de la description ci-après de modes de réalisation, laquelle est faite en référence aux dessins annexés dans lesquels :

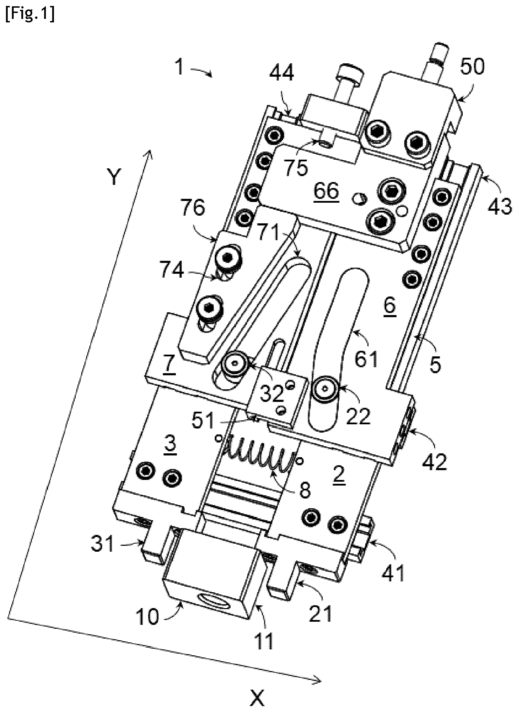

[Fig. 1] la figure 1 est une vue en perspective de face d'une pince à serrage parallèle lors d'un passage d'une position de desserrage à une position de serrage selon divers modes de réalisation ;

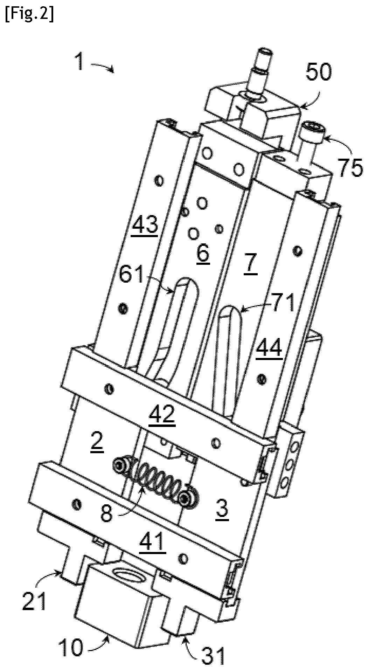

[Fig.2] la figure 2 est une vue en perspective arrière de la pince à serrage parallèle de la figure 1 ;
[Fig.3] la figure 3 est une vue en perspective de face d'une pince à serrage parallèle lors d'un passage d'une position de serrage à une position de desserrage selon divers modes de réalisation ; et
[Fig.4] la figure 4 est une vue schématique d'un dispositif à cames selon divers selon divers modes de réalisation.

En se référant aux figures annexées, il est affiché une pince 1 à serrage parallèle (aussi dite pince de type parallèle) destinée à saisir une pièce 10 ayant une surface 11 de référence disposée à une position prédéfinie.

La pince 1 à serrage parallèle comprend un premier bras 2 de préhension et un deuxième bras 3 de préhension (deux branches de préhension ou deux porte-mors) montés mobiles en translation l'un par rapport à l'autre sur au moins un premier rail 41, 42 de guidage suivant une première direction X. Le premier et le deuxième bras 2, 3 de préhension sont sensiblement parallèles.

Dans un mode de réalisation, le premier et le deuxième bras 2, 3 de préhension sont retenus par deux rails 41, 42 de guidage, sensiblement parallèles à la première direction X et dans lesquels les deux bras 2, 3 de préhension peuvent coulisser.

Un premier et un deuxième mors 21, 31 sont montés, respectivement, sur une première et une deuxième extrémité en regard l'une de l'autre du premier et du deuxième bras 2, 3 de préhension. Ces mors 21, 31 sont montés sur les bras 2, 3 de préhension de façon à ce qu'ils puissent s'engager sur une pièce 10 à saisir par la pince 1 à serrage parallèle. Le premier et le deuxième mors 21, 31 comprennent, respectivement, une première face de préhension et une deuxième face de préhension sensiblement parallèles entre elles.

La pince 1 à serrage parallèle comprend, en outre, un dispositif à cames 5 monté mobile en translation sur au moins un deuxième rail 43, 44 de guidage suivant une deuxième direction Y sensiblement perpendiculaire à la première direction X.

Dans un mode de réalisation, le premier et le deuxième rail 41-44 de guidage prennent appui sur une plaque support ou une plaque dorsale (non affichée). Ces rails 41-44 de guidage sont solidaires de la plaque support et fixes par rapport à celle-ci. La plaque support est, dans un mode de réalisation, graduée dans la première direction X et/ou dans la deuxième direction Y.

Le dispositif à cames 5 comprend un organe 50 de traction ou de poussée permettant de déplacer ce dispositif à cames 5 suivant la deuxième direction Y. L'organe 50 de traction ou de poussée est une vis, un poussoir, une tige ou, plus généralement, toute pièce permettant de transmettre une poussée ou une traction au dispositif à cames 5. Dans un mode de réalisation, la pince 1 à serrage parallèle est pourvue d'un vérin (non affiché) dont le piston est articulé sur l'organe 50 de traction ou de poussée. En variante ou en combinaison, le dispositif à cames 5 est manoeuvrable manuellement par l'intermédiaire de l'organe 50 de traction ou de poussée.

Les deux bras 2, 3 de préhension sont réunies par un mécanisme à came à rainure. Ce mécanisme permet de transmettre un mouvement de translation du dispositif à cames 5 suivant la deuxième direction Y en un mouvement de translation des bras 2, 3 de préhension de l'une par rapport à l'autre suivant la première direction X de façon à permettre un passage de la pince 1 entre une position de serrage et une position de desserrage.

Pour cela, le dispositif à cames 5 comprend un premier chemin 61 de came et un deuxième chemin 71 de came. Ce premier (respectivement, deuxième) chemin 61, 71 de came est une piste de guidage en forme de rainure formée dans l'épaisseur du dispositif à cames 5.

Le premier chemin 61 de came s'étend entre une première extrémité 62 et une deuxième extrémité 63. Le deuxième chemin 71 de came s'étend entre une troisième extrémité 72 et une quatrième extrémité 73. Le premier et le deuxième chemin 61, 71 de came sont sensiblement de même dimension dans la deuxième direction Y (c.à.d. de même hauteur selon la deuxième direction Y).

Un premier galet 22 compris dans le premier bras 2 de préhension et un deuxième galet 32 compris dans le deuxième bras 3 de préhension sont engagés dans, respectivement, le premier chemin 61 de came et le deuxième chemin 71 de came de sorte qu'un déplacement du dispositif à cames 5 suivant la deuxième direction Y permet un passage du pince 1 entre une position de serrage dans laquelle le premier galet 22 et le deuxième galet 32 sont, respectivement, à la première extrémité 62 et à la troisième extrémité 72, et une position de desserrage dans laquelle le premier galet 22 et le deuxième galet 32 sont respectivement, à la deuxième extrémité 63 et à la quatrième extrémité 73.

Les galets 22, 32 sont des galets suiveurs, des tourillons de came ou, plus généralement, des éléments suiveurs du premier et du deuxième chemin 61, 71 de came ménagés dans le dispositif à cames 5. La première et la deuxième extrémité 62, 63 délimitent la course du premier galet 22 dans le premier chemin 61 de came. De même, la troisième et la quatrième extrémité 72, 73 délimitent la course du deuxième galet 32 dans le deuxième chemin 71 de came.

Les galets 22, 32 sont solidaires des bras 2, 3 de préhension et aptes à glisser dans les chemins 61, 71 de came correspondants sous l'action d'un déplacement en translation du dispositif à cames 5 suivant la deuxième direction Y. Sous l'effet d'un guidage simultané des galets 22, 32 dans les chemins 61, 71 de came, un déplacement en translation du dispositif à cames 5 suivant la deuxième direction Y entraine un déplacement en translation suivant la première direction X des bras 2, 3 de préhension. En tirant ou en appuyant sur l'organe 50 de traction ou de poussée, le dispositif à cames 5 peut être avancée ou reculée de façon à entraîner un rapprochement ou un écartement des bras 2, 3 de préhension.

Dans un mode de réalisation illustré par les figures annexées, le premier chemin 61 de came comprend, à sa première extrémité 62, une première section 64 de chemin de came sensiblement parallèle à la deuxième direction Y de façon à maintenir, lors d'un passage de la pince 1 d'une position de desserrage à une position de serrage (c.à.d. lors d'un déplacement du premier galet 22 vers la première extrémité 62 et du deuxième galet 32 vers la troisième extrémité 72), le premier bras 2 de préhension à une position prédéfinie à laquelle ce premier bras 2 de préhension est configuré pour venir en contact avec la surface 11 de référence de la pièce 10. Le premier chemin 61 de came se termine, en effet, à sa première extrémité 62 par la première section 64 de chemin de came sensiblement parallèle à la deuxième direction Y. Un tel profil du premier chemin 61 de came permet, avantageusement, de mettre en référence le premier mors 21 de la pince 1 à serrage parallèle par rapport à la surface 11 de référence de la pièce 10. La pince 1 à serrage parallèle est disposée de façon à correspondre la position de son premier mors 21, lorsque le premier galet 22 se trouve dans la première section 64, avec la position de la surface 11 de référence de la pièce 10.

Dans un mode de réalisation, le premier chemin 61 de came comprend une deuxième section 65 de chemin de came oblique par rapport à la deuxième direction Y. Par exemple, le premier chemin 61 de came est, à sa deuxième extrémité, oblique par rapport à la deuxième direction Y tel qu'il est illustré par les figures annexées. Le deuxième chemin 71 de came est oblique par rapport à la deuxième direction Y au moins à sa troisième extrémité 72. Dans un mode de réalisation illustré par les figures, le deuxième chemin 71 de came s'étend de façon sensiblement rectiligne entre sa troisième et sa quatrième extrémité 73 dans une direction oblique par rapport à la deuxième direction Y.

La dimension du premier chemin 61 de came dans la première direction X (c.à.d. la longueur de sa projection ou sa hauteur selon la première direction X) est plus courte que la dimension du deuxième chemin 71 de came dans cette première direction X de sorte que la course du premier bras 2 de préhension (ou, de manière équivalente, du premier mors 21) soit plus courte que celle du deuxième bras 3 de préhension (ou, de manière équivalente, du deuxième mors 31). Dans un mode de réalisation, la première section 64 de chemin de came est à l'origine d'une réduction de la course du premier mors 21 par rapport à celle du deuxième mors 31. Il en résulte, avantageusement, une pince 1 à deux mors 21, 31 parallèles désynchronisés où le premier mors 21 est ramené et maintenu à la position de la surface 11 de référence de la pièce 10 à saisir, alors que le deuxième mors 31 poursuit sa course jusqu'à venir en contact avec une surface de la ladite pièce 10 à saisir opposée à la surface 11 de référence.

Dans un mode de réalisation, le dispositif à cames 5 comprend une première came 6 et une deuxième came 7 intégrant, respectivement, le premier chemin 61 de came et le deuxième chemin 71 de came. La première came 6 et la deuxième came 7 sont disposées côté à côte. L'organe 50 de traction ou de poussée est fixé à la première came 6. Une pièce 51 de guidage rapportée sur la première came 6 et reçue dans une rainure de guidage rectiligne suivant la deuxième direction Y formée dans la deuxième came 7 permet de maintenir ces deux cames 6, 7 l'une à côté de l'autre suivant la deuxième direction Y.

Un moyen 52 de liaison élastique en compression interposé entre la première came 6 et la deuxième came 7 est configuré pour travailler en compression (c.à.d. sollicité en compression) dans la deuxième direction Y lors d'un passage de la pince 1 de la position de desserrage à la position de serrage. Le moyen 52 de liaison élastique en compression s'appuie d'une part sur la première came 6 et d'autre part sur la deuxième came 7 suivant la deuxième direction Y. Le moyen 52 de liaison élastique en compression est, dans un mode de réalisation, un ressort de compression (fonctionnant en compression).

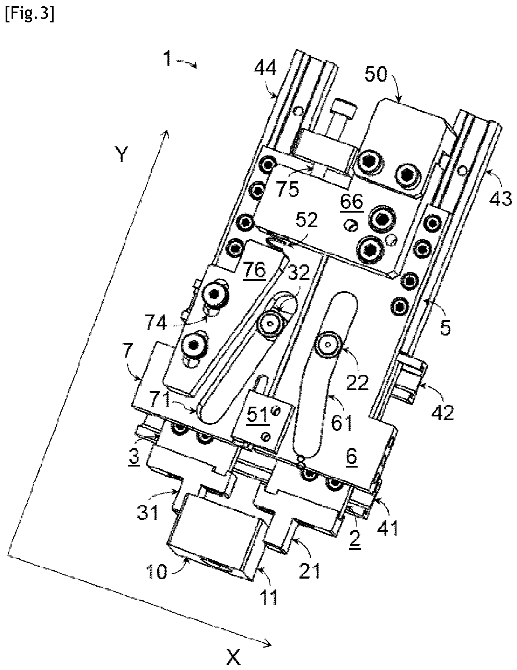

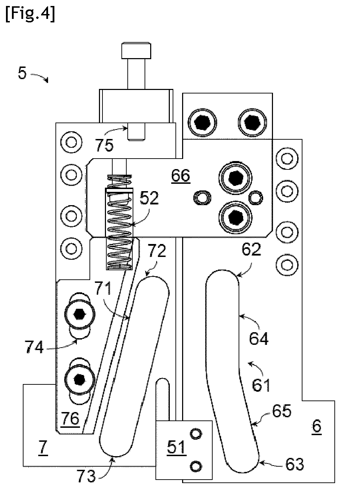

Comme représenté sur les figures 3 et 4, le moyen 52 de liaison élastique en compression est, dans un mode de réalisation, interposé entre une première flasque 66 et une deuxième flasque 76 fixées, respectivement, à la première came 6 et à la deuxième came 7. La première et la deuxième flasques 66, 76 sont montées sur la première et la deuxième came 6, 7 de façon à avoir, respectivement, une première face et une deuxième face en regard l'une de l'autre, perpendiculaires à la deuxième direction Y. Le moyen 52 de liaison élastique en compression est logé d'une part dans un premier trou ménagé dans ladite première face et d'autre part dans un deuxième trou (en regard du premier trou) ménagé dans ladite deuxième face.

Des moyens de fixation, tels que des assemblages vis-écrou, fixent la première et la deuxième flasque à, respectivement, la première et la deuxième came 6, 7. L'assemblage entre la deuxième flasque 76 et la deuxième came 7 est, dans un mode de réalisation, réglable dans la deuxième direction Y grâce à des ouvertures 74 oblongues formées dans la deuxième flasque 76.

Le moyen 52 de liaison élastique en compression est destiné à transmettre, lors d'un passage de la pince 1 de la position de desserrage à la position de serrage, à la deuxième came 7 un effort appliqué à la première came 6 (par l'intermédiaire de l'organe 50 de traction ou de poussée) dans la deuxième direction Y. La transmission de cet effort via le moyen 52 de liaison élastique en compression permet, avantageusement, de compenser une surcourse nécessaire au serrage après la mise en référence du premier mors 21 et permettre de régler l'effort de serrage du deuxième mors 31, notamment en fonction de la fragilité de la pièce 10 à serrer. Lors d'un passage de la pince 1 de la position de desserrage à la position de serrage, le deuxième mors 31 vient en contact avec la pièce 10 à saisir sous l'effet de la pression du moyen 52 de liaison élastique en compression. Le deuxième mors 31 dispose d'une surcourse de serrage qui effectue le serrage de la pièce 10. Une compensation de type ressort permet de limiter l'effort de serrage et ainsi garantir l'intégrité des pièces fragiles (plastiques, ou esthétique par exemple). Avantageusement, le moyen 52 de liaison élastique en compression rend la pince 1 à serrage parallèle particulièrement adaptée à la manipulation de pièces relativement fragiles.

Par ailleurs, le dispositif à cames 5 comprend une vis 75 (ou, plus généralement, un moyen de transmission d'effort) interposée entre la première came 6 et la deuxième came 7 destinée à transmettre, lors d'un passage de ladite pince 1 de la position de serrage à la position de desserrage, à la deuxième came 7 un effort appliqué à la première came 6 dans la deuxième direction Y. Cette vis 75 est, dans un mode de réalisation, montée sur une troisième flasque fixée à la deuxième came 7 en regard de la première flasque 66. La vis 75 est sensiblement parallèle à la deuxième direction Y.

Dans une mise en oeuvre illustrative, la deuxième came 7 est soumise à l'action du ressort 52 de compression pour un déplacement dans le sens de serrage et sous l'action de la vis 75 pour un déplacement dans le sens de desserrage.

Dans un mode de réalisation, les bras 2, 3 de préhension sont également soumis à l'action d'un moyen 8 de rappel élastique, tel qu'un ressort, qui les relie. En s'appuyant d'une part sur le premier bras 2 de préhension et d'autre part sur le deuxième bras 3 de préhension, le moyen 8 de rappel élastique tend, dans un mode de réalisation, à ramener la pince 1 à serrage parallèle dans sa position de serrage. En fonction de la position des bras 2, 3 de préhension de l'un par rapport à l'autre (écartés ou rapprochés) lorsque la pince 1 à serrage parallèle est en position de serrage, le moyen 8 de rappel élastique peut être un ressort travaillant en traction ou en compression.

La pince 1 à serrage parallèle peut être
- une pince à serrage interne (ouverture) dans laquelle les bras 2, 3 de préhension (ou les mors 21, 31) sont configurés pour s'écarter lors d'un passage de la pince 1 de la position de desserrage à la position de serrage ; ou
- une pince à serrage externe (fermeture) dans laquelle les bras 2, 3 de préhension (ou les mors) sont configurés pour se rapprocher lors d'un passage de la pince 1 de la position de desserrage à la position de serrage.

En fonction de la disposition des chemins 61, 71 de came, la pince 1 à serrage parallèle peut être à serrage interne ou à serrage externe. La disposition des chemins 61, 71 de came illustrée par les figures annexées (en s'éloignant des mors 21, 31 suivant la deuxième direction Y, le premier chemin 61 de came se rapproche d'abord du deuxième chemin 71 de came et est ensuite parallèle à la deuxième direction Y) ou celle obtenue à partir de cette disposition par une symétrie par rapport à un axe parallèle à la première direction X (en s'éloignant des mors 21, 31 suivant la deuxième direction Y, le premier chemin 61 de came est d'abord parallèle à la deuxième direction Y et s'éloigne ensuite du deuxième chemin 71 de came) correspondent à une pince 1 à serrage externe.

Une disposition des chemins 61, 71 de came dans laquelle
- en s'éloignant des mors 21, 31 suivant la deuxième direction Y, le premier chemin 61 de came s'éloigne d'abord du deuxième chemin 71 de came et est ensuite parallèle à la deuxième direction Y; ou
- en s'éloignant des mors 21, 31 suivant la deuxième direction Y, le premier chemin 61 de came est d'abord parallèle à la deuxième direction Y et se rapproche ensuite du deuxième chemin 71 de came,
correspondent à une pince 1 à serrage interne.

## Revendications

1. Pince (1) à serrage parallèle apte à saisir une pièce (10) ayant une surface (11) de référence, cette pince (1) comprenant :
- un premier bras (2) de préhension et un deuxième bras (3) de préhension montés mobiles en translation l'un par rapport à l'autre sur un premier rail (41, 42) de guidage suivant une première direction (X);
- un dispositif à cames (5) monté mobile en translation sur un deuxième rail (43, 44) de guidage suivant une deuxième direction (Y) sensiblement perpendiculaire à la première direction (X), ce dispositif à cames (5) intégrant :
- un premier chemin (61) de came s'étendant entre une première extrémité (62) et une deuxième extrémité (63);
- un deuxième chemin (71) de came s'étendant entre une troisième extrémité (72) et une quatrième extrémité (73) ;
le premier bras (2) de préhension comprenant un premier galet (22) engagé dans le premier chemin (61) de came et le deuxième bras (3) de préhension comprenant un deuxième galet (32) engagé dans le deuxième chemin (71) de came, le premier chemin (61) de came comprenant, à sa première extrémité (62), une première section (64) de chemin de came sensiblement parallèle à la deuxième direction (Y) de façon à maintenir, lors d'un passage de ladite pince (1) de la position de desserrage à la position de serrage, le premier bras (2) de préhension à une position prédéfinie à laquelle ce premier bras (2) de préhension est configuré pour venir en contact avec la surface (11) de référence de ladite pièce (10).

2. Pince (1) à serrage parallèle selon la revendication 1, **caractérisée en ce que** le dispositif à cames (5) comprend :
- une première came (6) intégrant le premier chemin (61) de came ;
- une deuxième came (7) intégrant le deuxième chemin de came ;
- un organe (50) de traction ou de poussée permettant de déplacer le dispositif à cames (5) suivant la deuxième direction (Y), cet organe (50) étant fixé à la première came (6) ;
- un moyen (52) de liaison élastique en compression interposé entre la première came (6) et la deuxième came (7), ce moyen (52) de liaison élastique en compression étant destiné à transmettre, lors d'un passage de la pince (1) de la position de desserrage à la position de serrage, à la deuxième came (7) un effort appliqué à la première came (6) dans la deuxième direction (Y).

3. Pince (1) à serrage parallèle selon la revendication 2, **caractérisée en ce que** le moyen (52) de liaison élastique en compression est un ressort de compression.

4. Pince (1) à serrage parallèle selon la revendication 2 ou 3, **caractérisée en ce que** le dispositif à cames (5) comprend, en outre, une vis (75) interposée entre la première came (6) et la deuxième came (7) destinée à transmettre, lors d'un passage de ladite pince (1) de la position de serrage à la position de desserrage, à la deuxième came (7) un effort appliqué à la première came (6) dans la deuxième direction (Y).

5. Pince (1) à serrage parallèle selon l'une quelconque des revendications précédentes, **caractérisée en ce que** la dimension du premier chemin (61) de came dans la première direction (X) est plus courte que la dimension du deuxième chemin (71) de came dans cette première direction (X).

6. Pince (1) à serrage parallèle selon l'une quelconque des revendications précédentes, **caractérisée en ce que** le deuxième chemin (71) de came est oblique par rapport à la deuxième direction (Y).

7. Pince (1) à serrage parallèle selon l'une quelconque des revendications précédentes, **caractérisée en ce qu'**elle comprend, en outre, une plaque support, le premier rail (41, 42) de guidage et le deuxième rail (43, 44) de guidage étant fixes par rapport à ladite plaque support, cette plaque support étant graduée dans la première direction (X) et/ou dans la deuxième direction (Y).

8. Pince (1) à serrage parallèle selon l'une quelconque des revendications précédentes, **caractérisée en ce qu'**elle comprend, en outre, un moyen (8) de rappel élastique reliant le premier bras (2) de préhension et le deuxième bras (3) de préhension

9. Pince (1) à serrage parallèle selon l'une quelconque des revendications précédentes, **caractérisée en ce que** le premier bras (2) de préhension et le deuxième bras (3) de préhension sont configurés pour se rapprocher lors d'un passage de ladite pince (1) de la position de desserrage à la position de serrage

10. Pince (1) à serrage parallèle selon l'une quelconque des revendications 1 à 8, **caractérisée en ce que** le premier bras (2) de préhension et le deuxième bras (3) de préhension sont configurés pour s'écarter lors d'un passage de ladite pince (1) de la position de desserrage à la position de serrage.

11. Pince (1) à serrage parallèle selon l'une quelconque des revendications précédentes, **caractérisée en ce que** le premier bras (2) de préhension comprenant un premier galet (22) engagé dans le premier chemin (61) de came et le deuxième bras (3) de préhension comprenant un deuxième galet (32) engagé dans le deuxième chemin (71) de came de sorte qu'un déplacement du dispositif à cames (5) suivant la deuxième direction (Y) permet un passage de ladite pince (1) entre une position de serrage dans laquelle le premier galet (22) et le deuxième galet (32) sont, respectivement, à ladite première extrémité (62) et à ladite troisième extrémité (72), et une position de desserrage dans laquelle le premier galet (22) et le deuxième galet (32) sont respectivement, à ladite deuxième extrémité (63) et à ladite quatrième extrémité (73).

12. Pince (1) à serrage parallèle selon l'une quelconque des revendications précédentes, **caractérisée en ce que** les deux chemins de came comprennent chacun au moins une section non-parallèle à la deuxième direction.
